# DEMANDE DE BREVET EUROPEEN

(11) **EP 0 814 063 A1**
(43) Date de publication de la demande: **29.12.1997**
(21) Numéro de dépôt: 97401356.7
(22) Date de dépôt: 16.06.1997
(51) Int. Cl.: C03B 37/012

(54) **Procédé de fabrication d'une préforme de fibre optique en verre fluoré**

(30) Priorité: 20.06.1996 FR 9607686
(71) Demandeur: ALCATEL ALSTHOM COMPAGNIE GENERALE D'ELECTRICITE, 75382 Paris Cédex 08 (FR)
(72) Inventeur: Chiquet, Frédéric, 91300 Massy (FR); Le Crom, Marylise, 78990 Elancourt (FR); Girard, Jean-Jacques, 91180 St Germain Les Arpajon (FR)
(74) Mandataire: Feray, Valérie

(57) **Abrégé**

La présente invention conceme un procédé de fabrication d'une préforme de fibre optique en verre fluoré, comprenant un coeur constitué d'un verre fluoré, entouré d'une gaine optique constituée d'un verre fluoré, comportant les opérations suivantes :
- introduction dans la partie inférieure (11) d'un moule (1) de section inteme cylindrique du verre de gaine (2) à l'état fondu,
- introduction dans la partie supérieure (12) du moule (1), au-dessus du verre de gaine, du verre de coeur (3) à l'état fondu,
- solidification progressive du verre de coeur et du verre de gaine à partir de l'interface entre les verres et le moule,
**caractérisé en ce que**, la cinétique de solidification du verre de coeur étant choisie de sorte que la solidification complète du verre de gaine intervient avant la solidification complète du verre de coeur, le procédé comporte en outre les opérations suivantes :
- centrifugation du contenu du moule simultanément à la solidification pour former, du fait de la diminution de volume des verres par solidification, une portion centrale vide de verre et sensiblement cylindrique, délimitée par le verre de gaine entièrement solidifié formant ainsi la gaine de la préforme, le verre de coeur n'étant pas entièrement solidifié à l'issue de la centrifugation,
- à l'issue de l'opération de centrifugation, écoulement dans la portion centrale du verre de coeur non solidifié, formant ainsi le coeur de la préforme,
- élimination de la préforme solidifiée du moule.

## Description

La présente invention conceme un procédé de fabrication d'une préforme de fibre optique en verre fluoré. Ces procédés sont à l'étude actuellement, du fait du grand intérêt de l'utilisation des fibres en verre fluoré dans les télécommunications, en particulier en tant que fibres optiques amplificatrices dans les bandes de longueurs d'onde de transmission situées autour de 1,3 µm et autour de 1,55 µm.

On appelle verre fluoré, de manière bien connue, un verre constitué d'un mélange de fluorures. Plusieurs types de verres fluorés existent actuellement ; on connaît ainsi par exemple les verres de type ZBLAN à base du mélange suivant : ZrF₄-BaF₂-LaF₃-AlF₃-NaF.

La fabrication de préformes de fibres optiques en verre fluoré est plus délicate à mettre en oeuvre que celle des préformes de fibres de silice. En effet, les verres fluorés étant constitués de systèmes chimiques très complexes (mélanges de plusieurs fluorures, en général au moins 4), il est très difficile de mettre en oeuvre pour la fabrication des préformes de fibres en verre fluoré les procédés classiques de dépôt en phase vapeur.

On étudie donc à l'heure actuelle plusieurs procédés de fabrication de préformes en verre fluoré.

Un premier de ces procédés, dit procédé de coulée intégrée (Built-in casting), consiste à verser dans un moule disposé verticalement un verre fluoré fondu destiné à constituer la gaine optique de la préforme, puis à le laisser se solidifier à partir de son interface avec le moule jusqu'à ce qu'il ne reste plus qu'une portion centrale et axiale de verre de gaine non solidifiée. On ouvre alors le moule à sa partie inférieure pour laisser s'écouler le verre non encore solidifié de sorte que l'on obtient dans le moule un tube, puis on verse un verre fluoré fondu destiné à constituer le coeur de la préforme dans ce tube, et on le fait refroidir. Ce procédé présente certains inconvénients.

L'interface coeur/gaine est contaminée par des impuretés provenant de l'atmosphère de synthèse, puisque le tube de gaine est au contact de cette atmosphère pendant son refroidissement. Or il est bien connu que l'atténuation des fibres en verre fluoré augmente très sensiblement en présence d'impuretés.

De plus, étant donné que le verre de coeur est versé à une température relativement élevée par rapport à la température en surface du tube de gaine, il se produit au contact de ces deux verres une cristallisation en surface du verre de gaine. Ceci crée des défauts dans la préforme et donc dans la fibre, qui en dégradent les propriétés de transmission, et notamment l'atténuation.

Enfin, le rapport entre le diamètre du coeur de la préforme et celui de la gaine est faible.

Pour pallier ces inconvénients, on a pensé à modifier le procédé précédent de la manière suivante. Pendant la solidification du verre de gaine, on verse le verre de coeur au-dessus du verre de gaine, puis après seulement, lorsque le verre de gaine est solidifié sur une épaisseur suffisante à partir de l'interface avec le moule, on ouvre le moule à sa partie inférieure pour laisser s'écouler la partie non solidifiée du verre de gaine, de sorte que le verre de coeur non encore solidifié s'écoule progressivement dans le tube ainsi formé. Ce procédé, dit procédé de coulée intégrée modifié (Modified built-in casting) est décrit par exemple dans l'article "Manufacture of fluoride-glass preforms" paru dans le Joumal of Non-Crystalline Solids 140(1992) 265-268.

Ce procédé, bien qu'il résolve le premier problème posé par le procédé précédent, ne résout pas le problème de cristallisation, puisqu'ici encore, un verre ayant une température élevée entre en contact avec un verre déjà solidifié, ni celui des dimensions (le rapport entre le diamètre du coeur de la préforme et celui de la gaine reste faible).

De plus, ce procédé conduit à la formation de préformes dans lesquelles le coeur est conique (tout comme le procédé de built-in casting), ce qui est préjudiciable aux propriétés de transmission de la fibre optique d'une part, puisque le diamètre de son coeur, qui sert à transmettre la majorité des ondes lumineuses, n'est pas constant, et d'autre part rend délicate la connexion de la fibre optique à une autre fibre, et en accroît les pertes. Cette conicité empêche en outre l'application de la technique classique de manchonnage, puisqu'il est nécessaire de corriger la conicité de sorte que l'on ne peut manchonner la préforme à l'aide d'un manchon tubulaire cylindrique classique.

On connaît par ailleurs un autre procédé de fabrication d'une préforme de fibre optique en verre fluoré, dit procédé par aspiration (Suction casting). Dans ce procédé, décrit dans le document JP 63-11535, les étapes initiales jusqu'à la coulée du verre de coeur sont identiques à celles du procédé "Modified built-in casting". Au lieu d'ouvrir le moule à sa partie inférieure pour laisser le verre de gaine non solidifié s'écouler, le moule reste fermé en permanence pendant tout le procédé. Durant la solidification du verre de gaine, ce demier se contracte de sorte qu'il se forme dans le moule un tube cylindrique, et ceci provoque un effet d'aspiration du verre de coeur non encore solidifié qui s'écoule ainsi dans le tube formé.

Ce procédé, tout comme le précédent, résout le premier problème posé par le procédé de coulée intégrée non modifié, c'est-à-dire que l'interface entre le coeur et la gaine de la préforme est exempte d'impuretés provenant de l'atmosphère de synthèse.

En revanche, le problème posé par ce procédé provient du fait que la contraction de la gaine ne se fait pas de manière uniforme, de sorte que le coeur n'est pas cylindrique sur toute sa longueur et que le rapport entre le diamètre de la gaine et celui du coeur n'est pas constant sur toute la longueur de la préforme.

On constate, d'après ce qui précède, qu'il n'existe pas pour le moment de procédé permettant de fabriquer une préforme de fibre optique en verre fluoré présentant simultanément toutes les caractéristiques suivantes :
- interface coeur/gaine exempte d'impuretés provenant de l'atmosphère de synthèse,
- pas de cristallisation de la gaine,
- coeur cylindrique sur toute sa longueur,
- rapport entre le diamètre du coeur et celui de la gaine constant sur toute sa longueur et supérieur à ceux obtenus avec les procédés de l'art antérieur.

La présente invention a donc pour but de mettre au point un procédé de fabrication d'une préforme de fibre optique en verre fluoré possédant toutes les caractéristiques mentionnées ci-dessus.

La présente invention propose à cet effet un procédé de fabrication d'une préforme de fibre optique en verre fluoré, comprenant un coeur constitué d'un verre fluoré, dit verre de coeur, entouré d'une gaine optique constituée d'un verre fluoré, dit verre de gaine, ledit procédé comportant les opérations suivantes :
- introduction dans la partie inférieure d'un moule de section inteme cylindrique dudit verre de gaine à l'état fondu,
- introduction dans la partie supérieure dudit moule, au-dessus dudit verre de gaine, dudit verre de coeur à l'état fondu,
- solidification progressive dudit verre de coeur et dudit verre de gaine à partir de l'interface entre lesdits verres et ledit moule,
**caractérisé en ce que**, la cinétique de solidification dudit verre de coeur étant choisie de sorte que la solidification complète dudit verre de gaine intervient avant la solidification complète dudit verre de coeur, ledit procédé comporte en outre les opérations suivantes :
- centrifugation du contenu dudit moule simultanément à ladite solidification pour former, autour de l'axe dudit moule, du fait de la diminution de volume desdits verres par solidification, une portion centrale vide de verre et de section transversale sensiblement cylindrique, délimitée par ledit verre de gaine entièrement solidifié formant ainsi la gaine de ladite préforme, ledit verre de coeur n'étant pas entièrement solidifié à l'issue de ladite centrifugation,
- à l'issue de l'opération de centrifugation, écoulement dans ladite portion centrale du verre de coeur non solidifié, formant ainsi le coeur de ladite préforme,
- élimination de la préforme solidifiée du moule.

Grâce à l'invention, étant donné que la solidification de la gaine se produit simultanément à la centrifugation, on obtient un tube de diamètre intérieur constant, de sorte que le coeur de la préforme a un diamètre constant sur toute la longueur de la préforme et que le rapport entre le diamètre de la gaine et celui du coeur est également constant sur toute la longueur de la préforme. En outre, la centrifugation permet d'obtenir un rapport entre le diamètre du coeur et celui de la gaine supérieur à ceux obtenus dans l'art antérieur.

De plus, étant donné que les étapes initiales d'introduction des verres de gaine et de coeur dans le moule du procédé selon l'invention sont similaires à celles des procédés de coulée intégrée modifiée et par aspiration, il n'y a pas d'impuretés provenant de l'atmosphère de synthèse à l'interface coeur/gaine d'une préforme obtenue selon l'invention ; il n'y a pas non plus de cristallisation de la gaine.

Selon un premier mode de réalisation avantageux permettant d'obtenir une cinétique de solidification du verre de coeur telle que la solidification complète du verre de gaine intervient avant la solidification complète du verre de coeur, la partie inférieure du moule a un diamètre inférieur à celui de la partie supérieure. Etant donné qu'ainsi, l'épaisseur du verre de coeur est supérieure à celle du verre de gaine, le verre de coeur met plus de temps à se solidifier que le verre de gaine.

Selon un deuxième mode de réalisation avantageux permettant d'obtenir la cinétique de solidification souhaitée, la partie inférieure du moule est constituée d'un matériau différent de celui constituant la partie supérieure, ce dernier étant tel que ses échanges thermiques avec le verre de coeur sont plus lents que ceux du matériau constituant la partie inférieure du moule avec le verre de gaine. De ce fait, le verre de coeur met plus longtemps à se solidifier que le verre de gaine.

Selon un troisième mode de réalisation avantageux permettant d'obtenir la cinétique de solidification souhaitée, le verre de coeur est introduit dans le moule à une température supérieure à celle du verre de gaine de sorte que la durée de la solidification du verre de coeur est supérieure à celle de la solidification du verre de gaine.

Enfin, selon un quatrième mode de réalisation avantageux permettant d'obtenir la cinétique de solidification souhaitée, les compositions des verres de coeur et de gaine sont choisies de sorte que leurs vitesses de solidification sont différentes, celle du verre de coeur étant inférieure à celle du verre de gaine.

Ces quatre modes de réalisation peuvent être mis en oeuvre séparément ou en combinaison les uns avec les autres.

D'autres caractéristiques et avantages de la présente invention apparaîtront dans la description suivante d'un mode de réalisation de l'invention, donnée à titre illustratif et nullement limitatif.

Dans les figures suivantes :
- la figure 1 est une vue schématique en coupe de l'opération d'introduction du verre de gaine à l'état fondu du procédé selon l'invention,
- la figure 2 est une vue schématique en coupe de l'opération d'introduction du verre de coeur à l'état fondu du procédé selon l'invention,
- la figure 3 est une vue schématique en coupe de l'opération de centrifugation du procédé selon l'invention,
- la figure 4 est une vue schématique en coupe de l'opération d'écoulement du verre de coeur du procédé selon l'invention,
- la figure 5 est une vue schématique en coupe d'une préforme obtenue selon le procédé de l'invention.

Dans toutes ces figures, les éléments communs portent les mêmes numéros de référence.

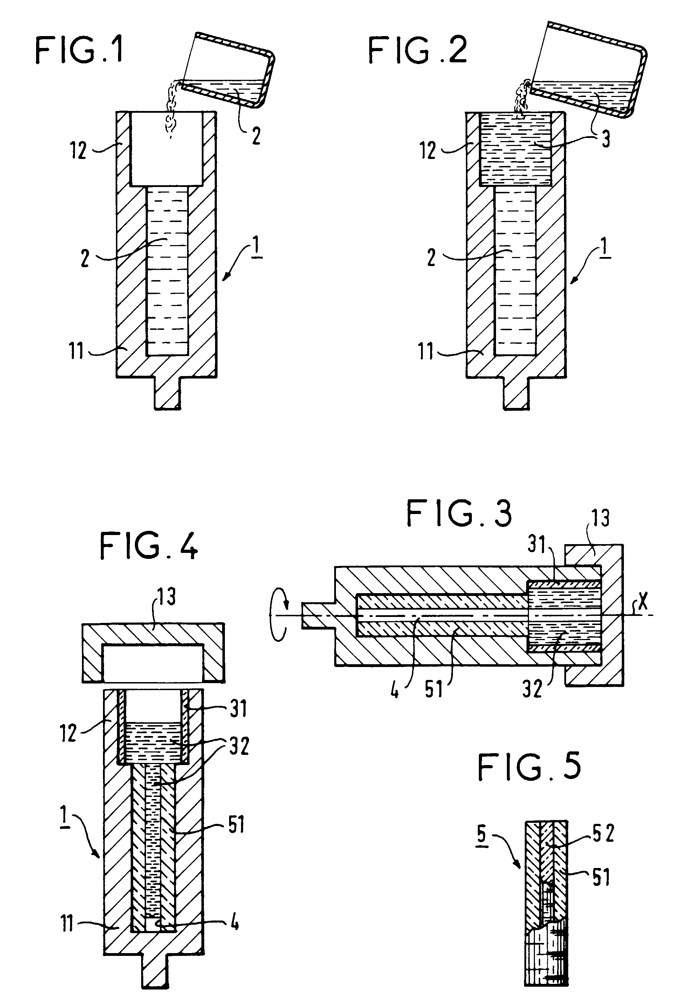

La figure 1 représente un moule 1 en laiton servant à la fabrication d'une préforme selon le procédé de l'invention. Ce moule 1 comprend une partie inférieure 11 de section inteme cylindrique, de diamètre intérieur égal à 15 mm et de hauteur égale à 70 mm, et une partie supérieure 12 de section inteme également cylindrique, de diamètre intérieur égal à 25 mm et de hauteur égale à 20 mm.

Avant le début du procédé, on préchauffe le moule 1 à une température comprise entre 250 et 300°C.

Dans une première étape du procédé selon l'invention représentée à la figure 1, on verse dans la partie inférieure 11 du moule 1 disposé verticalement, c'est-à-dire de sorte que sa partie supérieure 12 se trouve au-dessus de sa partie inférieure 11, un verre fluoré 2 à l'état fondu, destiné à constituer la gaine 51 (voir figure 5) de la préforme 5 à fabriquer. Ce verre de gaine 2 de type ZBLAN a par exemple la composition suivante (pourcentages molaires) :
- 53% de fluorure de zirconium ZrF₄,
- 20% de fluorure de baryum BaF₂,
- 4% de fluorure de lanthane LaF₃,
- 3% de fluorure d'aluminium AlF₃,
- 20% de fluorure de sodium NaF.

Le verre de gaine 2, en fusion à une température comprise entre 450 et 550°C, est coulé dans la partie inférieure 11 du moule 1 de manière à remplir entièrement cette dernière.

Dans une deuxième étape du procédé selon l'invention représentée à la figure 2, immédiatement après l'étape précédente, on verse dans la partie supérieure 12 du moule 1 toujours disposé verticalement, sur le verre de gaine 2 encore liquide, un verre fluoré 3 à l'état fondu, destiné à constituer le coeur 52 (voir figure 5) de la préforme 5 à fabriquer. Ce verre de coeur 3, également de type ZBLAN a par exemple la composition suivante (pourcentages molaires) :
- 54% de fluorure de zirconium ZrF₄,
- 23% de fluorure de baryum BaF₂,
- 4% de fluorure de lanthane LaF₃,
- 3% de fluorure d'aluminium AlF₃,
- 16% de fluorure de sodium NaF.

Le verre de coeur 3, en fusion à une température comprise entre 550 et 650°C, est coulé dans la partie supérieure 12 du moule 1 de manière à remplir entièrement cette dernière.

Dans une troisième étape du procédé selon l'invention représentée à la figure 3, on ferme le moule 1 de manière étanche, à l'aide d'un couvercle 13 pourvu de moyens étanches, on le dispose horizontalement, c'est-à-dire de sorte que sa partie supérieure 12 et sa partie inférieure 11 se trouvent côte à côte, et on l'entraîne en rotation autour de son axe longitudinal X, horizontal, à une vitesse comprise entre 1000 et 5000 tours/min pendant une durée comprise entre 90 s et 5 min.

Grâce au choix, selon l'invention, des dimensions des parties inférieure 11 et supérieure 12 du moule 1 (diamètre de la partie supérieure 12 plus grand que celui de la partie inférieure 11), des températures auxquelles sont coulés les verres de gaine 2 et de coeur 3 dans le moule 1 (température du verre de gaine 2 inférieure à la température du verre de coeur 3), ainsi que de la durée de l'étape de centrifugation, en fonction des compositions des verres de gaine 2 et de coeur 3, on contrôle la cinétique de solidification des verres de gaine 2 et de coeur 3. Ainsi, durant la centrifugation, le verre de gaine 2 se solidifie entièrement en formant un cylindre de retrait 4 (voir figure 4), de sorte que l'on obtient un tube de gaine 51 qui constituera la gaine de la préforme 5. Grâce à la centrifugation, le cylindre de retrait 4 a un diamètre uniforme sur toute sa longueur, ce qui élimine les problèmes de conicité des procédés de l'art antérieur.

Le diamètre du cylindre de retrait, qui est celui du coeur 52 de la préforme, est aisément contrôlé par le choix des dimensions du moule, de la température de coulée du verre de gaine 2, ainsi que des paramètres de la centrifugation mentionnés précédemment.

Toujours du fait du contrôle de la cinétique de solidification, le verre de coeur 3 ne se solidifie pas entièrement durant la centrifugation, c'est-à-dire que seule une partie périphérique 31 du verre de coeur située au contact de la paroi de la partie supérieure 12 du moule 1 est solidifiée à l'issue de la centrifugation, la partie centrale 32 du verre de coeur 3 étant encore liquide à l'issue de la centrifugation. Ceci est dû au fait que d'une part, la partie supérieure 12 du moule 1 est plus large que sa partie inférieure, et que d'autre part, la température de coulée du verre de coeur 3 est supérieure à celle du verre de gaine 2 ; ainsi, la durée nécessaire à la solidification complète du verre de coeur 3 est supérieure à la durée nécessaire à la solidification complète du verre de gaine 2 de sorte qu'à l'issue de la centrifugation, seul le verre de gaine 2 est entièrement solidifié.

Dans une quatrième étape du procédé selon l'invention, on remet le moule 1 dans sa position verticale initiale et l'on retire le couvercle 13, ce qui provoque la coulée de la partie centrale 32 du verre de coeur 3 restée liquide dans le cylindre de retrait 4 formé par le tube de gaine 51. On laisse ensuite ce verre de coeur se solidifier de manière à former le coeur 52 de la préforme 5, puis l'on élimine la préforme solidifiée du moule 1, en la sectionnant à sa partie supérieure pour éliminer la partie périphérique 31 du verre de coeur 3 solidifiée durant l'opération de centrifugation.

On obtient ainsi une préforme ayant les caractéristiques requises en termes de pureté et de géométrie.

Bien entendu, le procédé selon l'invention n'est pas limité au mode de réalisation qui vient d'être décrit.

En particulier, le contrôle de la cinétique de solidification des verres de gaine et de coeur peut être effectué selon plusieurs méthodes, énoncées de manière non limitative précédemment, utilisées isolément ou en combinaison les unes avec les autres.

Par ailleurs, il n'est pas nécessaire d'effectuer la centrifugation avec le moule en position horizontale ; on peut maintenir le moule vertical durant la centrifugation. Une centrifugation horizontale permet néanmoins d'obtenir un cylindre de retrait de dimensions plus homogènes qu'une centrifugation verticale, qui reste cependant avantageuse pour résoudre les problèmes de l'art antérieur.

Il n'est pas non plus nécessaire de créer une dépression après la centrifugation pour permettre au verre de coeur de s'écouler dans le tube de gaine.

Enfin, on pourra remplacer tout moyen par un moyen équivalent sans sortir du cadre de l'invention.

## Revendications

1. Procédé de fabrication d'une préforme de fibre optique en verre fluoré, comprenant un coeur constitué d'un verre fluoré, dit verre de coeur, entouré d'une gaine optique constituée d'un verre fluoré, dit verre de gaine, ledit procédé comportant les opérations suivantes :
- introduction dans la partie inférieure (11) d'un moule (1) de section inteme cylindrique dudit verre de gaine (2) à l'état fondu,
- introduction dans la partie supérieure (12) dudit moule (1), au-dessus dudit verre de gaine, dudit verre de coeur (3) à l'état fondu,
- solidification progressive dudit verre de coeur et dudit verre de gaine à partir de l'interface entre lesdits verres et ledit moule,
**caractérisé en ce que,** la cinétique de solidification dudit verre de coeur étant choisie de sorte que la solidification complète dudit verre de gaine intervient avant la solidification complète dudit verre de coeur, ledit procédé comporte en outre les opérations suivantes :
- centrifugation du contenu dudit moule simultanément à ladite solidification pour former, autour de l'axe dudit moule, du fait de la diminution de volume desdits verres par solidification, une portion centrale vide de verre et de section transversale sensiblement cylindrique, délimitée par ledit verre de gaine entièrement solidifié formant ainsi la gaine de ladite préforme, ledit verre de coeur n'étant pas entièrement solidifié à l'issue de ladite centrifugation,
- à l'issue de l'opération de centrifugation, écoulement dans ladite portion centrale du verre de coeur non solidifié, formant ainsi le coeur de ladite préforme,
- élimination de la préforme solidifiée du moule.

2. Procédé selon la revendication 1 caractérisé en ce que la partie inférieure dudit moule a un diamètre inférieur à celui de ladite partie supérieure.

3. Procédé selon l'une des revendications 1 ou 2 caractérisé en ce que la partie supérieure dudit moule est constituée d'un matériau différent de celui constituant la partie supérieure dudit moule, le matériau constituant la partie supérieure dudit moule étant tel que ses échanges thermiques avec ledit verre de coeur sont plus lents que ceux du matériau constituant la partie inférieure dudit moule avec ledit verre de gaine.

4. Procédé selon l'une des revendications 1 à 3 caractérisé en ce que ledit verre de coeur est introduit à une température supérieure à celle dudit verre de gaine de sorte que la durée de la solidification dudit verre de coeur est supérieure à celle de la solidification dudit verre de gaine.

5. Procédé selon l'une des revendications 1 à 4 caractérisé en ce que les compositions desdits verres de coeur et de gaine sont choisies de sorte que leurs vitesses de solidification sont différentes, celle dudit verre de coeur étant inférieure à celle dudit verre de gaine.

6. Procédé selon l'une des revendications 1 à 5 caractérisé en ce que, durant ladite opération de centrifugation, ledit moule est disposé horizontalement, de sorte que lesdites parties inférieure et supérieure se trouvent côte à côte.

7. Procédé selon l'une des revendications 1 à 6 caractérisé en ce que, préalablement à ladite centrifugation et après introduction desdits verres de coeur et de gaine dans ledit moule, on ferme ledit moule à sa partie supérieure de manière étanche.

8. Procédé selon l'une des revendications 1 à 7 caractérisé en ce que lesdits verres de coeur et de gaine sont de type ZBLAN.
